Europäisches Patentamt

European Patent Office

Office européen des brevets

(19)

(11) Numéro de publication: **0 027 763**
**B1**

(12) **FASCICULE DE BREVET EUROPEEN**

(45) Date de publication du fascicule du brevet:
**21.09.83**

(21) Numéro de dépôt: **80401476.9**

(22) Date de dépôt: **16.10.80**

(51) Int. Cl.³: **G 01 B 9/02,** G 01 B 11/14

(54) Procédé et appareil de mesure de distance par interférométrie laser à deux longueurs d'ondes.

(30) Priorité: **17.10.79 FR 7925771**

(43) Date de publication de la demande:
**29.04.81 Bulletin 81/17**

(45) Mention de la délivrance du brevet:
**21.09.83 Bulletin 83/38**

(84) Etats contractants désignés:
**AT BE CH DE FR GB IT LI LU NL SE**

(56) Documents cités:

**FR-A-2 035 878**
**FR-A-2 051 899**
**FR-A-2 245 932**
**US-A-3 970 389**

(73) Titulaire: **ANVAR Agence Nationale de Valorisation de la Recherche, 43, rue Caumartin, F-75436 Paris Cedex 09 (FR)**

(72) Inventeur: **Bourdet, Gilbert Louis Jacques, 13, avenue de l'Yvette, F-91440 Bures sur Yvette (FR)**
Inventeur: **Franco, Michel Alain Fernand, 13, rue Montéra, F-75012 Paris (FR)**

(74) Mandataire: **Corre, Jacques Denis Paul et al, Cabinet Regimbeau 26, Avenue Kléber, F-75116 Paris (FR)**

ACTORUM AG

Procédé et appareil de mesure de distance par interférométrie laser à deux longueurs d'ondes

L'invention concerne la mesure de distances par interférométrie laser.

Selon cette technique, l'écartement entre les deux lames de l'interféromètre matérialise la distance à mesurer. Comme l'on utilise leurs propriétés de réflexion partielle, ces lames sont également appelées miroirs ou réflecteurs.

Dans un premier procédé connu, la fréquence du rayonnement laser est figée, et l'on déplace l'un des miroirs de l'interféromètre le long de la distance à mesurer, tout en comptant les franges d'interférence qui défilent lors du déplacement. Très précis, ce procédé est de mise en oeuvre lente et délicate car le dispositif de déplacement du miroir doit satisfaire des impératifs rigoureux de linéarité et de monotonie, liés à la longueur d'onde du rayonnement laser. De plus, la mesure est très sensible aux turbulences de l'air ambiant. Ce premier procédé devient pratiquement inapplicable pour des distances de l'ordre du mètre ou plus.

Une variante, où l'interféromètre est fixe, consiste à faire varier largement la fréquence du laser entre deux limites, qui sont mesurées, de même qu'est compté le nombre de franges observées pendant la variation de fréquence (US-A-3 970 389). Une interférométrie complémentaire, à fréquence fixe, permet de compenser les variations du trajet optique pendant le temps de mesure. Cette variante souffre des mêmes inconvénients de temps de mesure, sinon de précision, que le procédé susvisé.

Un second procédé utilise une source de rayonnement qui emet des impulsions très courtes, et l'on mesure alors le temps mis par la lumière pour se propager sur la distance à mesurer. Des limites inhérentes aux moyens de mesure de temps ainsi qu'à la durée des impulsions engendrées font que l'erreur de distance est de l'ordre de 3 cm. La précision n'est alors satisfaisante que sur de très grandes distances, bien supérieures à la dizaine de mètres.

Selon un troisième procédé, une onde électromagnétique modulée est appliquée à l'interféromètre. Et l'on ajuste la fréquence de modulation pour qu'elle coïncide avec une résonance de l'interféromètre. Dans le cas d'un rayonnement laser modulé à 100 MHz (longueur d'onde 3 mètres), que l'on amène en coïncidence sur la résonance de l'interféromètre avec une erreur de l'ordre du millième de longueur d'onde, la précision est de l'ordre de 3 mm. Là encore, ce procédé n'est intéressant que pour des distances relativement grandes (au delà de cent mètres).

La présente invention a pour but principal de permettre de mesurer rapidement et avec une grande précision des distances comprises entre 1 mètre et quelques dizaines de mètres, ce qu'aucun des procédés ci-dessus ne peut faire.

L'invention concerne généralement un procédé de mesure de distances, du genre dans lequel deux rayonnements laser sont appliqués à un interféromètre pour mesurer son écartement entre lames, lié à la distance à mesurer; selon ce procédé, on ajuste séparément les fréquences ($F_1$, $F_2$) de deux rayonnements laser monofréquences pour qu'elles s'inscrivent respectivement dans deux modes longitudinaux différents de l'interféromètre, et l'on mesure la différence $\Delta F$ entre ces fréquences ($F_1$, $F_2$) après ajustement, l'écartement L entre les lames de l'interféromètre étant relié à la différence $\Delta F$ par l'expression:

$$L = \frac{k \cdot c}{2 \cdot \Delta F} \qquad (1)$$

où c désigne la vitesse de la lumière dans l'interféromètre et k est un nombre entier qui dépend de la différence d'ordre entre les deux modes longitudinaux concernés.

L'invention propose également un appareil de mesures de distances, du type dans lequel lécartement entre lames d'un interféromètre est lié à la distance à mesurer; selon l'invention cet appareil combine:

— deux lasers individuellement susceptibles d'une variation de fréquence,

— des moyens optiques pour réunir les deux faisceaux laser et les acheminer de façon unidirectionnelle vers l'entrée de l'interféromètre,

— des moyens d'asservissement qui réagissent au rayonnement transmis par l'interféromètre en faisant varier individuellement les fréquences des deux lasers pour qu'elles s'inscrivent respectivement dans deux modes longitudinaux différents de l'interféromètre, et

— des moyens pour mesurer la différence $\Delta F$ entre les fréquences des deux lasers, l'écartement L entre les lames de l'interféromètre étant relié à la différence $\Delta F$ par l'expression (1) donnée plus haut.

Dans un mode de réalisation pratique, les moyens d'asservissement comprennent:

— des moyens de modulation aptes à créer une modulation en fréquence prédéterminée à l'un des niveaux lasers ou interféromètre, pour provoquer une modulation correspondante des rayonnements transmis par l'interféromètre autour des fréquences de base respectives $F_1$ et $F_2$ des deux lasers,

— des moyens propres à effectuer une détection synchrone séparée de chacun des deux rayonnements transmis par rapport à sa fréquence de modulation prédéterminée, et

— deux chaînes de réaction propres à décaler respectivement les fréquences de base $F_1$ et $F_2$ des deux lasers en fonction des signaux issus des deux démodulations synchrones qui leur sont respectivement associées, pour obtenir dans chaque cas un extremum de lumière transmise.

Avantageusement, les deux rayonnements laser reçoivent des polarisations différents qui les rendent optiquement séparables.

Dans un premier mode de réalisation particulier, les moyens de modulation modulent à des fréquences respectives $f_1$ et $f_2$ les deux rayonnements laser ($F_1$ et $F_2$); de leur côté, les moyens de détection synchrone comprennent une optique de séparation des deux rayonnements transmis d'après leur polarisation, dont les deux sorties lumineuses sont respectivement amenées à deux détecteurs photoélectriques, ainsi que deux circuits de démodulation synchrone qui démodulent les sorties des deux détecteurs par rapport aux fréquences de modulation $f_1$ et $f_2$ respectivement associées, les sorties de ces deux circuits de détection synchrone étant respectivement appliquées aux entrées des deux chaînes de réaction.

Bien entendu, les fréquences $f_1$ et $f_2$ peuvent être égales, et prises en phases par exemple.

Une simplification peut être obtenue si l'on module les deux fréquences laser par deux fréquences différentes, ou encore par la même fréquence f, mais en quadrature. Un seul détecteur suffit alors, la séparation optique des deux rayonnements laser n'étant plus nécessaire, et les deux circuits de démodulation synchrone fonctionnent de manière découplée, avec les signaux locaux à fréquences $f_1$ et $f_2$, ou à la même fréquence f, mais en quadrature.

Dans une variante préférentielle de l'invention, les moyens de modulation modulent symétriquement, à une fréquence f, la position axiale de l'une des lames de l'interféromètre; les moyens de détection synchrone comprennent une optique de séparation des deux rayonnements transmis d'après leur polarisation, dont les deux sorties lumineuses sont respectivement amenées à deux détecteurs photoélectriques, ainsi que deux circuits de démodulation synchrone qui démodulent les sorties des deux détecteurs par rapport à la fréquence de modulation f, les sorties de ces deux circuits de détection synchrone étant respectivement appliquées aux entrées des deux chaînes de réaction.

D'autres caractéristiques et avantages de l'invention apparaîtront à la lecture de la description détaillée qui va suivre, faite en référence aux dessins annexés, sur lesquels:

la fig. 1 est un schéma général illustrant le procédé et l'appareil selon l'invention,

la fig. 2 illustre le schéma de principe du premier mode de réalisation précité,

la fig. 3 illustre la version simplifiée de ce premier mode de réalisation, et

la fig. 4 illustre la variante préférentielle de l'invention.

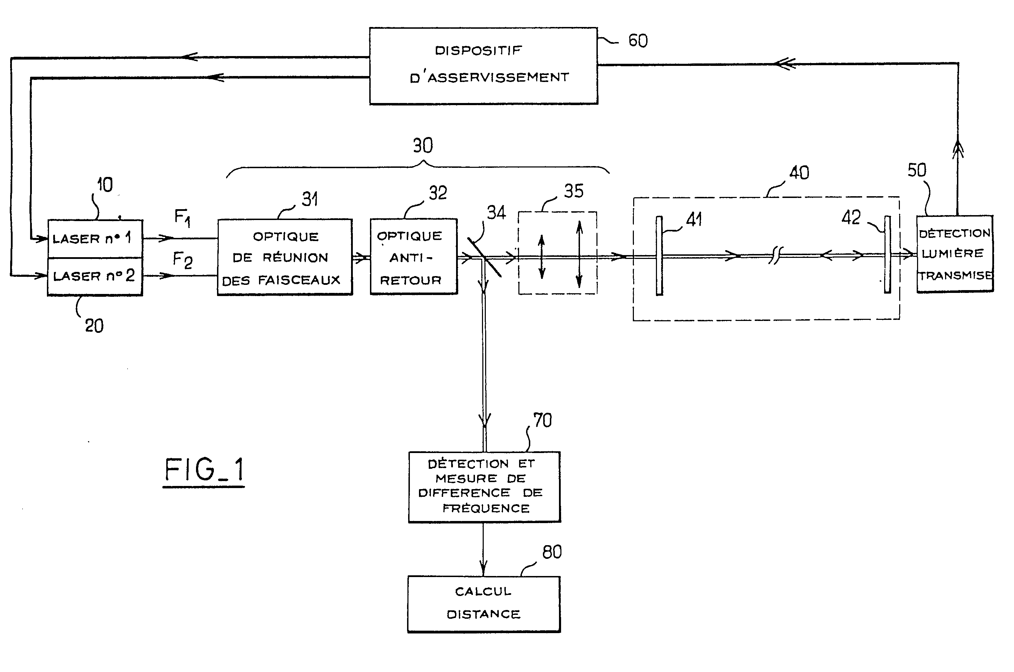

Sur la fig. 1, deux lasers 10 et 20 produisent des faisceaux de rayonnement respectifs qui sont amenés, sur un trajet commun par une optique de réunion 31 d'une manière connue.

Après cela, est réalisée en 32 une fonction anti-retour lumineux, accompagnée la plupart du temps d'une polarisation.

Une lame séparatrice à réflexion partielle 34 dérive une partie du faisceau commun des deux lasers vers un dispositif de détection et de mesure 70. L'autre partie du faisceau traverse un collimateur 35, destiné à adapter les caractéristiques des faisceaux issus des lasers aux modes de l'interféromètre, avant d'arriver à l'interféromètre 40, constitué de deux lames partiellement réfléchissantes 41 et 42. L'écartement de ces lames définit la distance à mesurer.

La lumière transmise par l'interféromètre est recueillie par un dispositif détecteur 50. Enfin le bloc 60 illustre schématiquement l'asservissement des fréquences des deux lasers 10 et 20 à l'aide des signaux du détecteur 50.

Cet asservissement est réalisé de telle sorte que les fréquences ($F_1$ et $F_2$) de ces deux lasers coïncident avec deux modes longitudinaux différents de l'interféromètre, c'est-à-dire que ces deux fréquences $F_1$ et $F_2$ vont s'inscrire respectivement à l'intérieur de deux pics différents de la réponse de l'interféromètre en fonction de la fréquence lumineuse qu'il reçoit.

De son côté le dispositif 70 comprend un détecteur d'un type à intermodulation, d'où il résulte une composante de fréquence $F_1$-$F_2$, mesurée par un compteur électronique, et à partir de laquelle un calculateur 80 détermine la distance entre les lames 41 et 42 de l'interféromètre.

Les lasers utilisés peuvent être de nombreux types. On préfère à l'heure actuelle des lasers à guide d'ondes au dioxyde de carbone, qui sont à la fois monomodes, très puissants, et susceptibles d'une variation de fréquence assez ample par action sur les dimensions de la cavité. Toutefois, d'autres lasers monomodes longitudinaux avec ou sans guide d'onde peuvent également convenir; il est avantageux que les lasers soient également monomodes transverse, car la surface d'onde est alors de nature à faciliter la détection.

En pratique, il est souhaitable pour obtenir les meilleures performances de réunir les deux lasers 10 et 20 dans une enceinte commune, telle qu'un bloc en Invar, tout en leur mettant en commun, en plus de la structure mécanique, l'alimentation électrique, le circuit du gaz, et le circuit de refroidissement.

En ce qui concerne la détection en 70, de nombreux capteurs sont utilisables; il est souhaitable que le capteur soit rapide, à large bande et sensible, tout en présentant une bonne réponse quadratique (capteur d'énergie lumineuse). Ainsi, on peut utiliser avantageusement le détecteur rapide Hg-Cd Te vendu par la Société Anonyme de Télécommunications, ou bien une diode du type MIM (métal-isolant-métal), ou d'autres détecteurs sensibles aux fréquences lumineuses concernées.

Outre l'organe détecteur proprement dit, le bloc 70 comprend un préamplificateur, tel que le modèle HP 84 470 et un compteur tel que HP 5345 A, tandis que l'unité de calcul 80 peut être par exemple le calculateur HP 9825 A, tous ces éléments étant vendus par la société Hewlett-Packard.

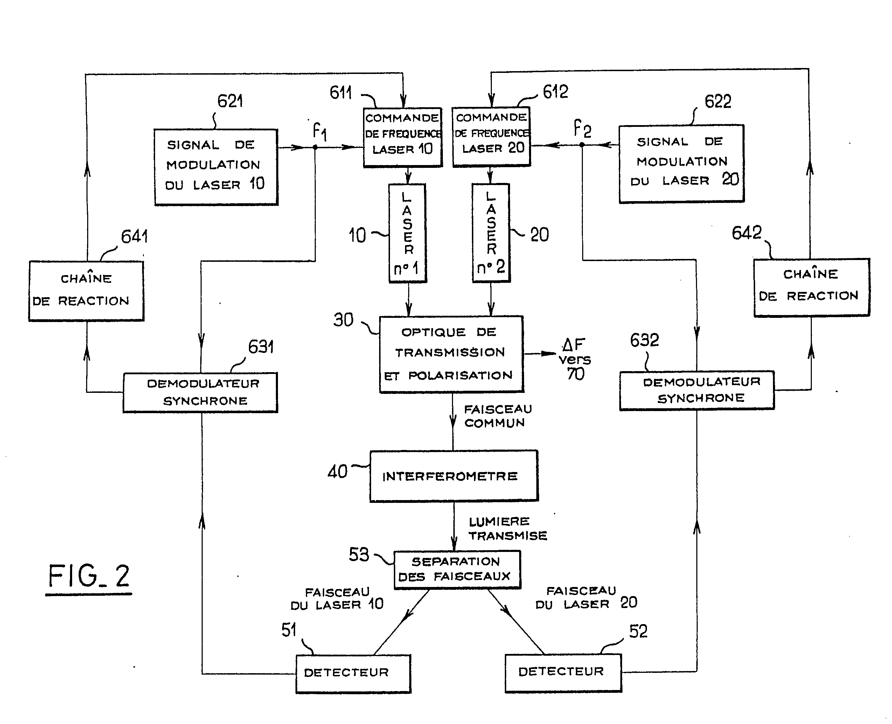

On décrira maintenant un premier mode de réalisation de l'invention, en ce qui concerne l'asservissement, en faisant référence à la fig. 2.

Les deux lasers à guide d'onde à $CO_2$ sont réunis comme précédemment indiqué, et leurs cavités sont individuellement ajustables, par exemple à l'aide de cales piézoélectriques, ce qui permet de faire varier individuellement leurs fréquences de fonctionnement $F_1$ et $F_2$.

Cette variation est commandée per des circuits électroniques 611 et 612 qui agissent respectivement sur les lasers 10 et 20, en l'occurrence sur leurs cales piézoélectriques respectives.

En l'espèce, deux chaînes de réaction 641 et 642 viennent commander les fréquences de base $F_1$ et $F_2$ des deux lasers 10 et 20, à travers les circuits 611 et 612. Dans ce mode de réalisation, les fréquences de base $F_1$ et $F_2$ font l'objet d'une modulation à des fréquences respectives $f_1$ et $f_2$, définies par les signaux de modulation qui émanent des circuits 621 et 622.

Les fréquences des deux rayonnements laser varient ainsi symétriquement, de préférence sinusoïdalement, autour des fréquences centrales $F_1$ et $F_2$. Bien entendu, les fréquences de modulation $f_1$ et $f_2$ peuvent être égales.

Ces fréquences $f_1$ et $f_2$ sont appliquées aussi à des circuits démodulateurs synchrones 631 et 632 dont les sorties commandent les chaînes de réaction 641 et 642, respectivement. Les démodulateurs synchrones 631 et 632 ont pour fonction de détecter de manière synchrone l'effet de la modulation initiale des lasers sur la lumière transmise par l'interféromètre de Fabry-Pérot. (On verra plus loin la disposition des détecteurs photoélectriques associés).

En pareil cas, le signal issu de la détection synchrone est proportionnel à la dérivée première de l'intensité de lumière transmise par rapport à la fréquence de la lumière. Ces signaux appliqués à l'entrée des chaînes de réaction 641 et 642 permettent donc d'ajuster les valeurs centrales $F_1$ et $F_2$ des rayonnements laser pour obtenir des extremum des intensités de lumière transmise autour de ces deux fréquences. Par exemple, les asservissements peuvent agir sur les fréquences $F_1$ et $F_2$ pour annuler les sorties des démodulateurs synchrones 631 et 632.

Il faut à cet effet séparer les détections effectuées autour des fréquences $F_1$ et $F_2$. Pour cela, on peut réaliser une séparation optique, les rayonnements des deux lasers étant alors polarisés d'une manière distincte: deux polarisations rectilignes perpendiculaires perpendiculaires ou encore deux polarisations circulaires de sens inverse. En pareil cas, on utilise à la sortie de l'interféromètre 40 le séparateur optique 53, qui alimente les deux détecteurs photoélectriques 51 et 52 respectivement connectés aux deux démodulateurs synchrones 631 et 632 (fig. 2).

Une autre solution consiste à multiplexer dans le temps la modulation des lasers 10 et 20. Dans ce cas (non représenté), un seul détecteur est branché à la sortie de l'interféromètre, et sa sortie est démultiplexée par des portes électroniques pour être aiguilée alternativement vers les démodulateurs synchrones 631 et 632.

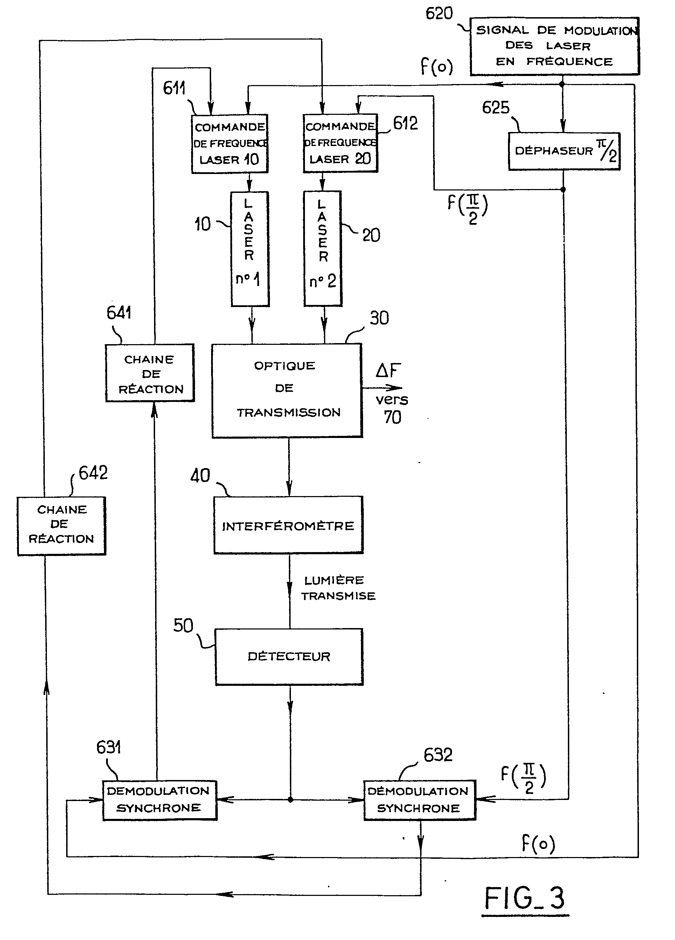

La fig. 3 illustre une autre solution, plus simple. Les deux lasers sont modulés à la même fréquence f, mais par des signaux en quadrature de phase, notés f(0) et $f(\frac{\pi}{2})$. Un seul détecteur 50 est branché entre l'interféromètre 40 et les deux démodulateurs synchrones 631 et 632, dont l'entrée est la même. Ce sont les signaux locaux en quadrature f(0) et $f(\frac{\pi}{2})$ respectivement appliquées aux deux démodulateurs 631 et 632 qui assurent le découplage des deux rayonnements laser, si bien que la sortie de 631 représente la dérivée de l'intensité lumineuse transmise autour de la frequence $F_1$, et celle de 632 la dérivée de l'intensité lumineuse transmise autour de la fréquence $F_2$.

Ces sorties commandent respectivement les chaînes de réaction 641 et 642, comme précédemment.

On observera que, dans ce premier mode de réalisation, les fréquences des deux rayonnements laser varient en permanence autour de leurs fréquences centrales $F_1$ et $F_2$. Cette variation se retrouve naturellement au niveau du signal $\Delta F$ transmis aux étages de mesure 70 et 80.

Cependant, comme la variation est centrée autour des valeurs $F_1$ et $F_2$, un traitement statistique tel qu'une moyenne sur un intervalle de temps suffisant (réalisée de façon inhérente par le comptage) permet d'obtenir finalement un signal représentatif de la différence entre les valeurs centrales $F_1$ et $F_2$, donc d'accéder à la distance entre lames de l'interféromètre.

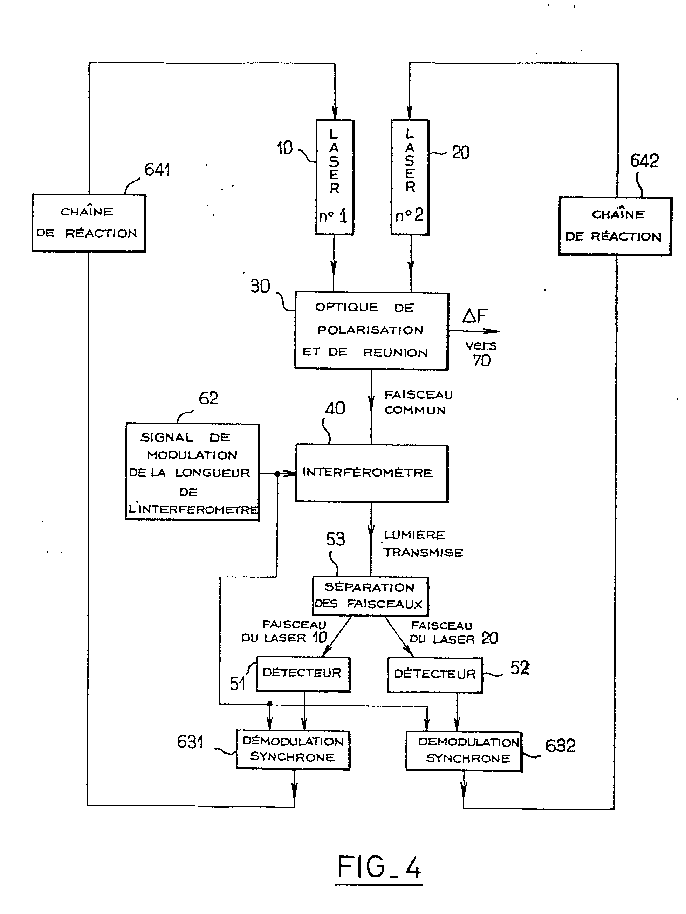

La fig. 4 illustre une variante préférentielle de l'invention. Comme précédemment indiqué, les rayonnements des deux lasers 10 et 20 sont rendus séparables, optiquement, à l'aide de deux polarisations distinctes, de préférence. La sortie de l'interféromètre 40 est amenée à un séparateur de faisceaux 53, dans les deux sorties alimentant les deux détecteurs 51 et 52.

Dans cette variante, c'est au niveau de l'une des lames de l'interféromètre, montée par exemple sur une cale piézoélectrique, que l'on fait intervenir le signal de modulation issu du circuit 62. Ainsi, la longueur de l'interféromètre est modulée autour de sa valeur centrale L, liée à la distance à mesurer. Par contre, les fréquences laser $F_1$ et $F_2$ ne sont pas modulées.

Pour le reste, le fonctionnement est le même que précédemment: les deux démodulateurs synchrones 631 et 632 sont reliés aux deux chaînes de réaction agissant sur les deux fréquences laser, respectivement, pour obtenir des pics de lumière transmise.

Cette variante est actuellement préférée car elle fait intervenir seulement la réponse amplitude-fréquence de l'interféromètre, alors que le premier mode de réalisation fait intervenir aussi la réponse amplitude-fréquence des lasers, à cause de leur modulation.

Les détecteurs 50 ou bien 51 et 52 peuvent être du même type que le détecteur incorporé au circuit 70. Les circuits électroniques d'asservissement sont de leur côté munis par exemple d'une interruption de boucle et d'une commande manuelle. Les lasers sont amenés sur deux modes différents de l'interféromètre de manière manuelle, après quoi les asservissements sont bouclés et suivent les deux pics ainsi atteints. Bien entendu, on peut aussi prévoir une recherche automatique des pics.

Les expériences exécutées pour des distances de 2, 4 et 13 mètres ont permis d'obtenir des précisions relatives allant de quelques $10^{-6}$, par turbulence faible (ambiance de laboratoire sans protection spéciale) à quelques $10^{-5}$ par turbulence très forte (jet d'air comprimé traversant la distance mesurée).

L'invention permet la mesure rapide et précise de grosses pièces et s'applique notamment aux arbres et paliers de turbines, aux pièces entrant dans la fabrication de cuves de méthanier, aux grosses machines outils et à leur commande automatique, ou encore aux voilures d'avions, par exemple.

**Revendications**

1. Procédé de mesure de distance, du type dans lequel deux rayonnements laser ($F_1$, $F_2$) sont utilisés pour mesurer l'écartement entre lames (41, 42), lié à la distance à mesurer, d'un interféromètre, caractérisé par le fait que les deux rayonnements laser ($F_1$, $F_2$) sont des rayonnements mono-fréquence, à fréquence ajustable, appliqués tous deux au même interféromètre, que l'on ajuste séparément (60) les fréquences ($F_1$, $F_2$) de ces deux rayonnements laser mono-fréquence pour qu'elles s'inscrivent respectivement dans deux modes longitudinaux différents de l'interféromètre, et que l'on mesure (70) la différence $\Delta F$ entre ces fréquences ($F_1$, $F_2$) après ajustement, l'écartement L entre les lames de l'interféromètre étant relié à la différence $\Delta F$ par l'expression:

$$L = \frac{k \cdot c}{2 \cdot \Delta F}$$

où c désigne la vitesse de la lumière dans l'interféromètre et k est un nombre entier qui dépend de la différence d'ordre entre les deux modes longitudinaux concernés.

2. Appareil de mesure de distance, du type dans lequel deux lasers (10, 20) sont utilisés pour mesurer l'écartement entre lames (41, 42) d'un interféromètre (40), lié à la distance à mesurer, caractérisé par le fait que les deux lasers (10, 20) sont des lasers mono-fréquence individuellement susceptibles d'une variation de fréquence, et par le fait que l'appareil comporte:
— des moyens optiques (31, 32) pour réunir les deux faisceaux laser et les acheminer de façon unidirectionelle vers l'entrée de l'interféromètre,
— des moyens d'asservissement (60) qui réagissent au rayonnement transmis (50) par l'interféromètre en faisant varier individuellement les fréquences ($F_1$, $F_2$) des deux lasers (10, 20) pour qu'elles s'inscrivent respectivement dans deux modes longitudinaux différents de l'interféromètre, et
— des moyens (70) pour mesurer la différence $\Delta F$ entre les fréquences des deux lasers, l'écartement L entre les lames de l'interféromètre étant relié à la différence $\Delta F$ par l'expression:

$$L = \frac{k \cdot c}{2 \cdot \Delta F}$$

où c désigne la vitesse de la lumière dans l'interféromètre et k est un nombre entier qui dépend de la différence d'ordre entre les deux modes longitudinaux concernés.

3. Appareil selon la revendication 2, caractérisé par le fait que les moyens d'asservissement comprennent:
— des moyens de modulation (621, 622; 620; 62) aptes à créer une modulation en fréquence prédéterminée à l'un des niveaux lasers (611, 612) ou interféromètre (62), pour provoquer une modulation correspondante des rayonnements transmis par l'interféromètre autour des fréquences de base respectives $F_1$ et $F_2$ des deux lasers,
— des moyens (631, 632) propres à effectuer une détection synchrone séparée de chacun des deux rayonnements transmis par rapport à sa fréquence de modulation prédéterminée, et
— deux chaînes de réaction (641, 642) propres à décaler respectivement les fréquences de base $F_1$ et $F_2$ des deux lasers en fonction des signaux issus des deux démodulations synchrones qui leur sont respectivement associées, pour obtenir dans chaque cas un extremum de lumière transmise.

4. Appareil selon la revendication 3, caractérisé par le fait que les deux rayonnements laser reçoivent des polarisations différentes (30) qui les rendent optiquement séparables (53).

5. Appareil selon la revendication 4, caractérisé par le fait que les moyens de modulation (611, 612, fig. 2) modulent à des fréquences respectives $f_1$ et $f_2$ les deux rayonnements laser ($F_1$ et $F_2$), que les moyens de détection synchrone comprennent une optique (53) de séparation des deux rayonnements transmis d'après leur polarisation, dont les deux sorties lumineuses sont respectivement amenées à deux détecteurs photoélectriques (51, 52), ainsi que deux circuits de démodulation synchrone (631, 632) qui démodulent les sorties des deux détecteurs par rapport aux fréquences de modulation $f_1$ et $f_2$ respectivement associées, les sorties de ces deux circuits de détection synchrone étant respectivement appliquées aux entrées des deux chaînes de réaction (641, 642).

6. Appareil selon la revendication 4, caractérisé par le fait que les moyens de modulation (62, fig. 4) modulent symétriquement, à une fréquence f, la position axiale de l'une des lames de l'interféromètre (40), que les moyens de détection synchrone comprennent une optique de séparation (53) des deux rayonnements transmis d'après leur polarisation, dont les deux sorties lumineuses sont respectivement amenées à deux détecteurs photoélectriques (51, 52), ainsi que deux circuits de démodulation synchrone (631, 632) qui démodulent les sorties des deux détecteurs par rapport à la fréquence de modulation f, les sorties de ces deux circuits de détection synchrone étant respectivement appliquées aux entrées des deux chaînes de réaction (641, 642).

7. Appareil selon la revendication 3, caractérisé par le fait que les moyens de modulation (620, fig. 3) modulent à la même fréquence f, mais en quadrature, les deux rayonnements laser (F1, F2), que les moyens de détection synchrone comprennent un détecteur photoélectrique unique (50), sur lequel est amenée la lumière transmise par l'interféromètre, ainsi que deux circuits de démodulation synchrone (631, 632) qui sont reliés à la sortie du détecteur unique et démodulent cette sortie par rapport à des composantes en quadrature à la fréquence f, les sorties de ces deux circuits de détection synchrone étant respectivement appliquées aux entrées des deux chaines de réaction (641, 642).

8. Appareil selon l'une des revendications 2 à 7, caractérisé par le fait que les deux lasers (10, 20) sont de type monomode longitudinal.

9. Appareil selon la revendication 8, caractérisé par le fait que les deux lasers (10, 20) sont également de type monomode transverse, tels que des lasers à guide d'ondes à $CO_2$.

10. Appareil selon l'une des revendications 2 à 9, caractérisé par le fait que les deux lasers (10, 20) sont logés dans une enceinte commune, telle qu'un bloc en Invar, où ils partagent leur alimentation électrique, leur circuit de gaz et leur circuit de refroidissement.

**Patentansprüche**

1. Verfahren zur Distanzmessung, wobei zwei Laserstrahlen (F1, F2) verwendet werden, um den Abstand zwischen Plättchen (41, 42) eines Interferometers, welcher mit der zu messenden Distanz verknüpft ist, zu messen, dadurch gekennzeichnet, dass die beiden Laserstrahlen (F1, F2) jeweils eine einzige einstellbare Frequenz haben und beide demselben Interferometer zugeführt werden, dass man getrennt (60) die Frequenzen (F1, F2) der beiden mono-frequenten Laserstrahlen einstellt, so dass sie in Längsrichtung des Interferometers die Bedingungen für Interferenz verschiedener Ordnung erfüllen, und dass man die Differenz ΔF zwischen diesen Frequenzen (F1, F2) misst (70) nach der Einstellung, wobei die Entfernung L zwischen den Plättchen des Interferometers mit der Differenz ΔF durch folgenden Ausdruck verknüpft ist:

$$L = \frac{k \cdot c}{2 \cdot \Delta F}$$

in welchem c die Lichtgeschwindigkeit im Interferometer bezeichnet und k eine ganze Zahl, welche vom Unterschied der Ordnung der beiden Interferenzen in Längsrichtung abhängt.

2. Einrichtung zur Distanzmessung, wobei zwei Laser (10, 20) verwendet werden, um den Abstand zweier Plättchen (41, 42) eines Interferometers (40) zu messen, welcher mit der zu messenden Distanz verknüpft ist, dadurch gekennzeichnet, dass die zwei Laser (10, 20) monofrequente Laser sind, welche individuell in ihrer Frequenz verändert werden können und dadurch gekennzeichnet, dass die Einrichtung umfasst:
— optische Mittel (31, 32) zur Vereinigung der beiden Laserbündel und zu ihrer gleichgerichteten Zuführung zum Eingang des Interferometers,
— Regelungsmittel (60) welche auf die vom Interferometer durchgelassene Strahlung (50) reagieren, indem sie individuell die Frequenzen (F1, F2) der zwei Laser (10, 20) variieren lassen, sodass diese in Längsrichtung des Interferometers zwei verschiedene Interferenzbedingungen erfüllen, und
— Mittel (70) um den Unterschied ΔF zwischen den Frequenzen der zwei Laser zu messen, wobei der Abstand L zwischen den Plättchen des Interferometers mit der Differenz ΔF durch den Ausdruck:

$$L = \frac{k \cdot c}{2 \cdot \Delta F}$$

verbunden ist, in welchem c die Lichtgeschwindigkeit im Interferometer bedeutet und k eine ganze Zahl, die vom Unterschied in der Ordnung der beiden Interferenzen in Längsrichtung abhängt.

3. Einrichtung nach Anspruch 2, dadurch gekennzeichnet, dass die Regelungsmittel umfassen:
— Modulationsmittel (621, 622; 620; 62), die geeignet sind, eine vorbestimmte Frequenzmodulation im Bereich des Lasers (611, 612) oder Interferometers (62) zu erzeugen, um eine entsprechende Modulation der vom Interferometer durchgelassenen Strahlen, um die Grundfrequenzen F1 und F2 der beiden Laser zu bewirken,
— Mittel (631, 632) die geeignet sind, eine synchrone, gesonderte Detektion jedes der beiden durchgelassenen Strahlen bezüglich seiner vorbestimmten Frequenzmodulation zu treffen, und
— Rückführungsketten (641, 642), die geeignet sind, die Grundfrequenzen F1 bzw. F2 der beiden Laser in Abhängigkeit von den Signalen der beiden synchronen Demodulationen, die ihnen jeweils zugeordnet sind, zu verschieben, um in jedem Fall einen Extremwert des durchgelassenen Lichtes zu erhalten.

4. Einrichtung nach Anspruch 3, dadurch gekennzeichnet, dass die beiden Laserstrahlen verschiedene Polarisationen (30) aufweisen, welche sie optisch trennbar (53) machen.

5. Einrichtung nach Anspruch 4, dadurch gekennzeichnet, dass die Modulationsmittel (611, 612, Fig. 2) mit der Frequenz $f_1$ bzw. $f_2$ die beiden Laserstrahlen ($F_1$ und $F_2$) modulieren, dass die Mittel der synchronen Detektion eine Optik (53) zur Trennung der beiden durchgelassenen Strahlen entsprechend ihrer Polarisation aufweisen, deren beide Lichtausgänge an zwei photoelektrische Detektoren (51 bzw. 52) angeschlossen sind, sowie zwei synchrone Demodulationskreise (631, 632), welche die Ausgänge der beiden Detektoren in Hinblick auf die Modulationsfrequenzen $f_1$ und $f_2$ demodulieren, wobei die Ausgänge dieser beiden Schaltungen zur gleichzeitigen Detektion an die Eingänge der beiden Rückführketten (641, 642) angeschlossen sind.

6. Einrichtung nach Anspruch 4, dadurch gekennzeichnet, dass die Mittel zur Modulation (62, Fig. 4) mit einer Frequenz f die Axialstellung eines der beiden Plättchen des Interferometers (40) symmetrisch modulieren, dass die Mittel zur synchronen Detektion eine Optik (53) zur Trennung der beiden durchgelassenen Strahlen entsprechend ihrer Polarisation umfassen, deren beide Lichtausgänge an zwei photoelektrische Detektoren (51, 52) angeschlossen sind, sowie an zwei Schaltungen zur synchronen Demodulation (631, 632), welche die Ausgänge der beiden Detektoren in Hinblick auf die Modulationsfrequenz f demodulieren und wobei die Ausgänge dieser beiden Schaltungen zur synchronen Detektion an die Eingänge der beiden Rückführketten (641, 642) angeschlossen sind.

7. Einrichtung nach Anspruch 3, dadurch, gekennzeichnet, dass die Mittel zur Modulation (620, Fig. 3) mit derselben Frequenz aber un 90° phasenverschoben die beiden Laserstrahlen ($F_1$, $F_2$) modulieren, dass die Mittel zur synchronen Detektion einen einzigen photoelektrischen Detektor (50) umfassen, welchem das vom Interferometer durchgelassene Licht zugeführt wird, sowie zwei Schaltungen zur gleichzeitigen Demodulation (631, 632), welche an den Ausgang des einzigen Detektors angeschlossen sind und diesen demodulieren in Hinblick auf seine beiden phasenveschobenen Komponenten der Frequenz f, und wobei die beiden Schaltungen zur gleichzeitigen Detektion an die Eingänge der beiden Rückführketten (641, 642) angeschlossen sind.

8. Einrichtung nach einem der Ansprüche 2 bis 7, dadurch gekennzeichnet, dass die beiden Laser (10, 20) longitudinale Ein-Typenlaser sind.

9. Einrichtung nach Anspruch 8, dadurch gekennzeichnet, dass die beiden Laser (10, 20) auch transversale Ein-Typenlaser sind, beispielsweise $CO_2$-Laser mit Wellenleiter.

10. Einrichtung nach einem der Ansprüche 2 bis 9, dadurch gekennzeichnet, dass die beiden Laser (10, 20) in einem gemeinsamen Behälter angeordnet sind, beispielsweise in einem Block aus Invar, in welchem sie ihre Stromversorgung, ihre Gasversorgung und ihren Kühlkreis teilen.

## Claims

1. A method of distance mesurement, of the type in which two laser beams ($F_1$, $F_2$) are used to measure the spacing between plates (41, 42) of an interferometer, the spacing being associated with the distance to be measured, characterised in that the two laser beams ($F_1$, $F_2$) are mono-frequency beams, of an adjustable frequency, both being applied to the same interferometer, the frequencies ($F_1$, $F_2$) of these two mono-frequency laser beams are adjusted separately (60) so that they are registred respectively in two different longitudinal modes of the interferometer, and the difference $\Delta F$ between these frequencies ($F_1$, $F_2$) is measured (70) after adjustment, the spacing L between the plates of the interferometer being associated with the difference $\Delta F$ by the expression:

$$L = \frac{k \cdot c}{2 \cdot \Delta F}$$

wherein $c$ designates the speed of the light in the interferometer and $k$ represents an integer which depends on the difference in order between the two longitudinal modes which are concerned.

2. An apparatus for distance measurement of the type in which two lasers (10, 20) are used to measure the spacing between plates (41, 42) of an interferometer (40), said spacing being associated with the distance to be measured, characterised in that the two lasers (10, 20) are mono-frequency lasers which are individually capable of a frequency variation, and in that the apparatus comprises:

— optical means (31, 32) to combine the two laser beams and send them in a unidirectional manner towards the input of the interferometer,

— monitoring means (60) which react to the beam transmitted (50) by the interferometer by individually varying the frequencies ($F_1$, $F_2$) of the two lasers (10, 20) so that they are registered respectively in two different longitudinal modes of the interferometer, and

— means (70) for measuring the difference $\Delta F$ between the frequencies of the two lasers, the spacing L between the plates of the interferometer being associated mith the difference $\Delta F$ by the expression:

$$L = \frac{k \cdot c}{2 \cdot \Delta F}$$

wherein $c$ designates the speed of the light in the interferometer and $k$ represents an integer which depends on the difference in order between the two longitudinal modes which are concerned.

3. An apparatus according to claim 2, characterised in that the monitoring means comprise:

— modulation means (621, 622; 620; 62) which are capable of producing a modulation in a frequency which is predetermined at one of the laser levels (611, 612) or interferometer level (62), to cause a corresponding modulation of the beams trasmitted by the interferometer around the respective base frequencies $F_1$ and $F_2$ of the two lasers,

— means (631, 632) adapted to perform a separate synchronous detection of each of the two beams which are transmitted with respect to its predetermined modulation frequency, and

— two reaction chains (641, 642) adapted to respectively shift the base frequencies $F_1$ and $F_2$ of the two lasers as a function of the signals emitted from the two synchronous demodulations which are respectively associated therewith, to obtain in each case an extremum of transmitted light.

4. An apparatus according to claim 3, characterised in that the two laser beams receive different polarisations (30) which render them optically separable (53).

5. An apparatus according to claim 4, characterised in that the modulation means (611, 612, Fig. 2) modulate at respective frequencies $f_1$ and $f_2$ the two laser beams ($F_1$ and $F_4$), the synchronous detection means comprise optics (53) for separating the two transmitted beams according to their polarisation, the two light outputs of which are respectively guided to two photoelectric detectors (51, 52), as well as two synchronous demodulation circuits (631, 632) which demodulate the outputs of the two detectors with respect to the respectively associated modulation frequencies $f_1$ and $f_2$, the outputs of these two synchronous detection circuits being respectively applied to the inputs of the two reaction chains (641, 642).

6. An apparatus according to claim 4, characterised in that the modulation means (62, Fig. 4) modulate symmetrically, at a frequency $\underline{f}$, the axial position of one of the plates of the interferometer (40), the synchronous, detection means comprise optics (53) for separating the two transmitted beams according to their polarisation, the two light outputs of which are respectively guided to two photoelectric detectors (51, 52), as well as two synchronous demodulation circuits (631, 632) which demodulate the outputs of the two detectors with respect to the modulation frequency $f$, the outputs of these two synchronous detection circuits being respectively applied to the inputs of the two reaction chains (641, 642).

7. An apparatus according to claim 3, characterised in that the modulation means (620, Fig. 3) modulate the two laser beams (F1, F2) at the same frequency $\underline{f}$, but in quadrature, the synchronous detection means comprise a single photoelectric detector (50), onto which is brought the light transmitted by the interferometer, as well as two synchronous demodulation circuits (631, 632) which are connected to the output of the single detector and which demodulate this output with respect to quadrature components at frequency $\underline{f}$, the outputs of these two synchronous detection circuits being respectively applied to the inputs of the two reaction chains (641, 642).

8. An apparatus according to one of claims 2 to 7, characterised in that the two lasers (10, 20) are of the longitudinal monomode type.

9. An apparatus according to claim 8, characterised in that the two lasers (10, 20) are also of the transverse monomode type, such as $CO_2$ waveguide lasers.

10. An apparatus according to one of claims 2 to 9, characterised in that the two lasers (10, 20) are housed in a common enclosure, such as an Invar block, where they share their electric supply, their gas circuit and their cooling circuit.

FIG_1

DISPOSITIF D'ASSERVISSEMENT ~ 60

30

10  $F_1$  31  32  34  35  40  50

LASER n° 1 →  OPTIQUE DE RÉUNION DES FAISCEAUX  31  OPTIQUE ANTI-RETOUR  32  41  42  DÉTECTION LUMIÈRE TRANSMISE  50

LASER n° 2 →  $F_2$

20

DÉTECTION ET MESURE DE DIFFÉRENCE DE FRÉQUENCE ~ 70

CALCUL DISTANCE ~ 80

0 027 763

FIG_2

0 027 763

FIG_3

FIG_4